# EUROPEAN PATENT APPLICATION

(11) **EP 2 918 397 A1**
(43) Date of publication of application: **16.09.2015**
(21) Application number: 12881981.0
(22) Date of filing: 09.11.2012
(51) Int. Cl.: B29C 70/06

(54) **APPARATUS FOR LAMINATING REINFORCED FIBER BASE MATERIAL, AND METHOD FOR LAMINATING REINFORCED FIBER BASE MATERIAL**

(71) Applicant: Mitsubishi Heavy Industries, Ltd., Tokyo 108-8215 (JP)
(72) Inventor: TANOUE Satoru, Tokyo 108-8215 (JP); TOMONAGA Takuya, Tokyo 108-8215 (JP); SHINDO Kentaro, Tokyo 108-8215 (JP); YAMASAKI Hirokazu, Nagasaki-shi Nagasaki 851-0406 (JP)
(74) Representative: Intès, Didier Gérard André
(86) International application number: PCT/JP2012/079104
(87) International publication number: WO 2014/073090

(57) **Abstract**

When a reinforced fiber material sheet is laminated on a mold, a wrinkle can be reduced according to the present invention. A laminating apparatus of sheets of reinforced fiber material, contains: a sheet feeding section which feeds the reinforced fiber material sheet; a first roller which pushes the reinforced fiber material sheet against the mold; and second and third rollers arranged on a downstream side of said first roller in a feeding direction of the reinforced fiber material sheet, and on both sides of said first roller in a width direction of the reinforced fiber material sheet, to push the reinforced fiber material sheet against the mold.

## Description

### Technical Field

The present invention is related to a technique for laminating a sheet of reinforced fiber material on a mold.

### Background Art

As a method of manufacturing a reinforced fiber material exemplified by carbon fiber reinforced plastic resin (CFRP) and glass fiber reinforced plastic resin (GFRP), a prepreg method is known. This method uses a reinforced fiber material (hereinafter, to be referred to as a prepreg sheet) in which resin is impregnated in a sheet made of carbon fiber and/or glass fiber. The prepreg sheets are laminated over a plurality of layers and molded, and the resin is hardened, thereby forming a reinforced member. Patent Literatures 1 to 5 are prior art literatures about the prepreg method.

As a technique to which the prepreg method can be applied, a wind turbine blade is exemplified. The light weight and high strength are required for the wind turbine blade. Thus, the reinforced fiber material is preferably used.

### Citation List

Patent Literature 1: WO 2011/078336
Patent Literature 2: JP 2005-297513A
Patent Literature 3: JP 2005-329593A
Patent Literature 4: JP 2006-218720A
Patent Literature 5: JP 2008-238809A
Patent Literature 6: JP 2007-255366A

### Summary of the Invention

A technique is demanded in which wrinkles can be reduced when prepreg sheets are laminated and fiber reinforced plastic resin of high quality can be manufactured.

Means for solving a problem will be described by using reference numerals which are used in the "Description of Embodiments" with parentheses. These reference numerals are added to make a correspondence relation between the "CLAIMS" and the "Description of Embodiments" clear. However, these reference numerals must not be used to interpret the technical scope of the inventions defined in the "CLAIMS".

In an aspect of the present invention, a laminating apparatus of sheets of reinforced fiber material, contains: a sheet feeding section (4, 5, 6) which feeds a sheet of a reinforced fiber material; a first roller (9) which pushes the reinforced fiber material sheet (7) against a mold (14); and second and third rollers (10-1, 10-2) arranged on a downstream side of said first roller in a feeding direction of the reinforced fiber material sheet, and on both sides of said first roller in a width direction of the reinforced fiber material sheet to push the reinforced fiber material sheet against the mold.

In another aspect of the present invention, the laminating apparatus further contains: a tension roller (8) disposed on an upstream side of the first roller to apply tension force to an entire of the reinforced fiber material sheet in the width direction.

In another aspect of the present invention, each of the first to third rollers carries out a swing motion around a turning axis which is parallel to the feeding direction of the reinforced fiber material sheet.

In another aspect of the present invention, the sheet feeding section contains: a rotation axis around which the reinforced fiber material sheet is rolled in a roll form; and a torque adjusting section which adjusts pulling force of the reinforced fiber material sheet.

In another aspect of the present invention, a laminating method of a sheet of a reinforced fiber material, by using the laminating apparatus of the reinforced fiber material sheet of the present invention, contains: arranging said mold; and pushing the reinforced fiber material sheet against said mold by said first to third rollers while the laminating apparatus is moved with respect to said mole in a longitudinal direction of said mold.

### Brief Description of the Drawings

FIG. 1 is a side view of a laminating apparatus;
FIG. 2 is a top view of the laminating apparatus;
FIG. 3 is a plan view showing the arrangement of roller in the laminating apparatus;
FIG. 4 is a cross-sectional view of the laminating apparatus;
FIG. 5 is a cross-sectional view of the laminating apparatus; and
FIG. 6 is a cross-sectional view of the laminating apparatus.

### Description of Embodiments

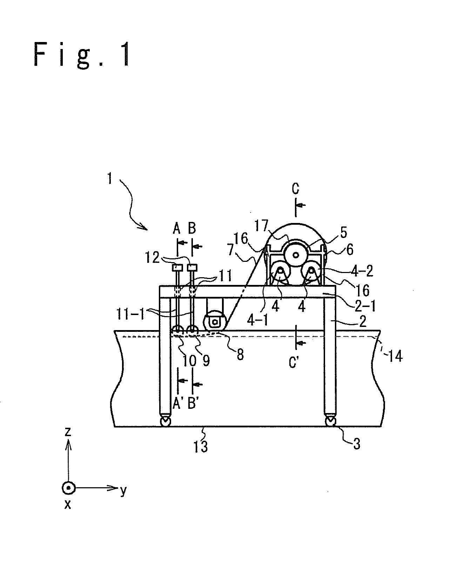

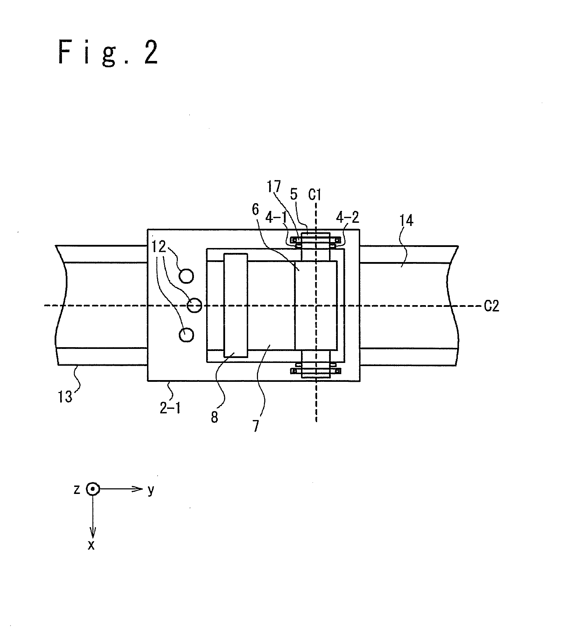

Hereinafter, embodiments of the present invention will be described below with reference to the attached drawings. In the present embodiment, a laminating apparatus in which prepreg sheets are laminated on a blade mold as a mold to manufacture a wind turbine blade used for a wind turbine generator will be described as an example of the laminating apparatus. The blade mold extends in a longitudinal direction and curved in a concave shape (shape that is convex downwardly) in a width direction (a blade chord direction on a blade cross-section) of the blade mold. FIG. 1 is a side view showing the laminating apparatus 1 of the prepreg sheets (reinforced fiber material) according to an embodiment of the present invention. FIG. 2 is a top view of the laminating apparatus.

The laminating apparatus 1 contains a table-shaped frame 2, which is composed of a plurality of legs and a horizontal framework 2-1 forming a horizontal plane which is supported at a certain height by the legs. The laminating apparatus 1 is configured such that the plurality of legs and the horizontal framework 2-1 straddle a base 13 where a blade mold 14 is formed in a top surface of the base. That is, the horizontal framework 2-1 of the laminating apparatus 1 is supported above the blade mold 14 by the plurality of legs. A wheel 3 is attached to a lower end of each leg of the frame 2. Thus, the frame 2 is moveable in a first direction (a y-axis direction) by use of the wheels 3. The first direction indicates the longitudinal direction of the blade mold 14, namely, the feeding direction of the prepreg sheet.

A sheet feeding section is installed on the horizontal framework 2-1 of the frame 2 to supply (feed) a sheet 7 of prepreg material. The sheet feeding section contains a rolled sheet 6 in which the sheet 7 of the prepreg material is rolled around a core member 5. The rolled sheet 6 is rotated around a rotation axis extending in an x-axis direction (a width direction of the sheet 7, namely, a width direction of the blade mold 14), so that the sheet 7 is fed. The fed sheet 7 is guided through a space provided in the horizontal framework 2-1, to a lower portion below the horizontal framework 2-1.

The rolled sheet 6 is supported on the frame 2 as described below. A supporting section 4 is disposed on the horizontal framework 2-1. In the supporting section 4, a pair of supporting rollers 4-1 and 4-2 are arranged in a y-axis direction to rotatably support rotation axes of the rollers 4-1 and 4-2 extending in the x-direction. The pair of supporting rollers 4-1 and 4-2 is installed on both sides in the width direction of the rolled sheet 6. The cylindrical core member 5 having the rotation axis in the x-axis direction is put on the pair of supporting rollers 4-1 and 4-2, so that the rolled sheet 6 is supported to be rotatable around a rotation axis C1 extending in the x-axis direction.

A tension roller 8 is provided for the frame 2. The tension roller 8 applies a tensional force in a direction of the blade mold 14 to the sheet 7 from the rolled sheet 6 to support rollers 9 and 10 to be described later.

As a specific example, in FIGS. 1 and 2, the tension roller 8 is arranged below the horizontal framework 2-1 and at a position between the rolled sheet 6 and the support rollers 9 and 10 in the y-axis direction. The tension roller 8 contains a cylindrical roller. The roller is biased downwardly in a vertical direction by a spring and the like and is rotatable around the rotation axis extending in the x-axis direction. The sheet 7 is sent to a downstream direction (support roller side) while a predetermined tensional force is applied to the roller 8.

The tension roller 8 has a width wider in the x-axis direction than that of the sheet 7. Thus, the tensional force is applies to the entire width of the sheet 7 by the tension roller 8. Consequently, the tensional force can be uniformly applied to the sheet 7.

The sheet feeding section is desired to further contain a torque adjusting section for adjusting pulling force (feeding force) of the prepreg sheet 7 that is required to rotate the rolled sheet 6 around the rotation axis. For example, it is possible to attain the torque adjustment by adding an adjustable friction force to the core member 5. In such a configuration, it is possible to adjust the tension force of the sheet 7 that is pulled out from the rolled sheet 6.

The torque adjusting section can be attained in the way described below. A supporting section 16 is fixed to the frame 2. A support member 17 is attached to the supporting section 16. The support member 17 is attached to the supporting section 16 such that a vertical height can be adjusted based on a rotation amount of a bolt, for example. A part of the support member 17 is brought into contact with the core member 5, so that the vertical height of the support member 17 is adjusted. Consequently, the pulling force of the sheet 7 can be adjusted by applying the adjustable friction force to the core member 5. An operator adjusts the pulling force of the sheet 7 so that wrinkle becomes the least after the sheet 7 is pushed onto the blade mold 14 by the support rollers 9 and 10.

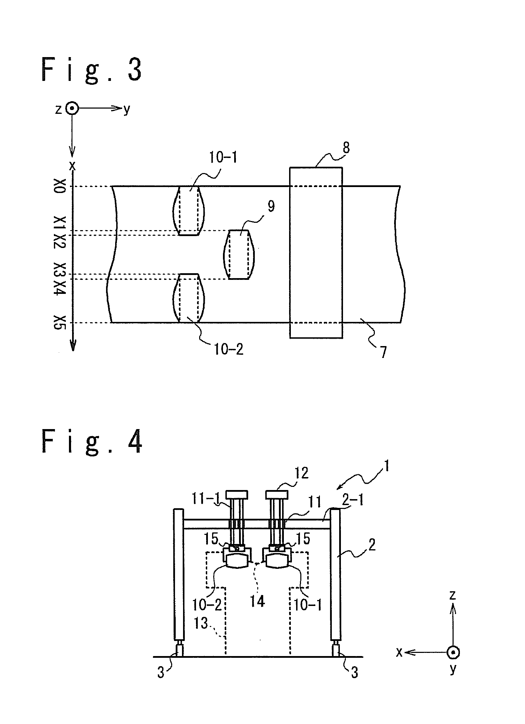

A pushing section is arranged on the further downstream side (an opposite direction of the y-axis) of the tension roller 8 to push the sheet 7 supplied from the sheet feeding section against the blade mold 14. The pushing section contains a plurality of the support rollers. The support rollers 9 and 10 are drawn on FIG. 1. FIG. 3 is a plan view showing the roller arrangement. The support roller 9 on an upstream side is a first roller that is arranged at the vicinity of the center in the width direction of the sheet 7 (blade mold 14), and the support rollers 10 on the downstream side in FIG. 1 includes a second roller 10-1 and a third roller 10-2, which are arranged on both sides of the first roller in the width direction of the prepreg sheet 7. That is, the support rollers 9 and 10 are arranged in a V-shaped form from the center of the upstream side to both sides of the downstream side in the feeding direction of the sheet 7. Each of the support rollers 9 and 10 has the shape of a barrel in which the center in the width direction is expanded in correspondence to the expanded shape of the mold 14.

The support rollers 9 and 10 are arranged below the horizontal framework 2-1. Each of the support rollers 9 and 10 is connected through support bars 11-1 to weights 12 arranged above the horizontal framework 2-1. The support bar 11-1 is attached to the frame 2 as follows. A linear bush corresponding to each of the plurality of support bars 11-1 is fixed to the frame 2. The linear bush supports the support bar 11-1 in such a manner that the support bar 11-1 cannot move within a horizontal surface and can freely move in the vertical direction within a certain range. The linear bush has a stopper mechanism for preventing the support bar 11-1 from moving beyond a certain range in the vertical direction.

Each of the support rollers 9 and 10 is a roller made of rubber sponge, which is rotated around the rotation axis substantially extending in the x-axis direction. Each of the support rollers 9 and 10 imposes the vertically downward force to the sheet 7 by the weight 12. That is, each of the support rollers 9 and 10 has a function as a pressure welding roller for pressure-welding the prepreg sheet 7 onto the blade mold 14.

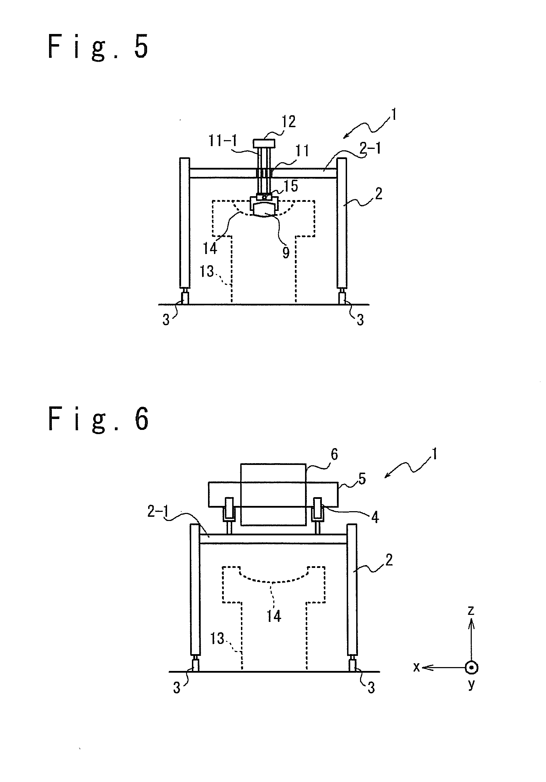

FIG. 4 is a side view when the laminating apparatus 1 is viewed from the positive direction of the y-axis in a cross-section along the line A-A' in FIG. 1. FIG. 5 is a view when the laminating apparatus 1 is viewed from the positive direction of the y-axis in a cross-section along a line B-B' in FIG. 1. FIG. 6 is a view when the laminating apparatus 1 is viewed from the positive direction of the y-axis in a cross-section along a line C-C' in FIG. 1. In examples of FIGS. 4 to 6, the mold 14 has a deeply recessed shape at the vicinity of the center rather than the vicinities of both ends of the width direction (x-axis direction) in the cross-section perpendicular to the longitudinal direction (y-axis direction).

In the laminating apparatus 1 of the present embodiment that contains the structures shown in FIGS. 3 to 6, the support roller section contains the three rollers arranged in the V shaped form, which are composed of the one roller 9 arranged at the center on the upstream side and the two rollers 10-1 and 10-2 arranged in the x-axis direction (the width direction of the sheet 7) on the downstream side with respect to the roller 9. The tension roller 8 has a width which is slightly greater than that of the sheet 7, so as to cover the entire width of the sheet 7.

The roller 9 at the center, the roller 10-1 in the negative direction of the x-axis and the roller 10-2 in the positive direction of the x-axis are arranged as mentioned below. The end of the roller 10-1 in the negative direction of the x-axis is positioned at the same position as the end of the sheet 7 in the negative direction of the x-axis, or a position which slightly comes off from the end of the sheet 7. The end of of the roller 10-2 in the positive direction of the x-axis is positioned at the same position as the end of of the sheet 7 in the positive direction of the x-axis, or a position which slightly comes off from the end of the sheet 7. Moreover, a part of the end of the first roller 9 and a part of the end of the second roller 10-1 overlap with each other, when they are viewed from the y-axis direction (the portion between x1 and x2 in FIG. 3). Also, a part of the end of the first roller 9 and a part of the end of the third roller 10-2 overlap with each other, when they are viewed from the y-axis direction (the portion between x3 and x4 in FIG. 3). As its result, the entire width of the sheet 7 is covered with the rollers 9, 10-1 and 10-2.

The first support roller 9 is arranged at the center in the width direction (x-axis direction) of the sheet 7. The second support roller 10-1 is arranged on the downstream side from there at a position shifted from the center in the negative direction of the x-axis. The third support roller 10-2 is arranged at the same position in a feeding direction (y-axis direction) as the second support roller 10-1 and is at a position shifted from the center in the positive direction of the x-axis. The second support roller 10-1 and the third support roller 10-2 are arranged symmetrically with respect to a central line C2 (extending in the y-axis direction and passing through the center of the first support roller 9 in the width direction). The first to third support rollers 9, 10-1 and 10-2 have the identical shape to one another.

The present embodiment employs the roller arrangement of the V shaped form of the three rollers 9, 10-1 and 10-2. However, for example, five rollers may be arranged in symmetrical with respect to the central line that passes through the center of the blade mold 14 in the width direction (or the sheet 7), and the sheet 7 may be pushed against from the vicinity of the center toward an outside direction in sequence.

Each of the first to third support rollers 9, 10-1 and 10-2 can carry out a swing motion in which each of the rollers is turned around a turning axis 15 as a swing axis parallel to the feeding direction (y-axis direction). Through this operation, each of the rollers of a barrel type presses the sheet 7 in a direction substantially vertical to the blade mold 14, following a contour shape swollen in the zx cross-section of the blade mold 14.

A method of laminating the prepreg sheets onto the blade mold 14 by using the laminating apparatus 1 that has the above configuration is carried out as follows. The base 13 is arranged on a floor surface and the blade mold 14 for the reinforced fiber material is disposed on an upper portion of the base 13. For example, when the long structural body such as the blade of the wind turbine should be manufactured, the base 13 is the long structural body in which the y-axis direction on the drawing is defined as the longitudinal direction.

The table-shaped laminating apparatus 1 is installed to straddle the base 13. At first, a position of the laminating apparatus 1 in the y-axis direction is adjusted to a start position in such a manner that the lamination can be started from the end of the blade mold 14 in the longitudinal direction. The sheet 7 is pulled out from the rolled sheet 6. Then, the sheet 7 is put between the blade mold 14 and the portion of the tension roller 8 and the support rollers 9 and 10. While the sheet 7 is pulled out from the rolled sheet 6 toward the support rollers 9 and 10, the frame 2 is moved in the y-axis direction (first direction). Consequently, the sheet 7 is provided along the blade mold 14.

A predetermined tensional force is applied to the sheet 7 by the tension roller 8. At this time, the sheet 7 is not still pushed against the blade mold 14. Next, in the sheet 7 to which the predetermined tensional force is applied by the tension roller 8, the vicinity of the center thereof is pushed against the blade mold 14 by the support roller 9 located at the vicinity of the center in the width direction. After that, the support rollers 10-1 and 10-2 push the sheet 7 against the blade mold 14 on the outsides in the width direction with respect to the suppressing roller 9. When wrinkle is generated in a process at which the support rollers 10-1 and 10-2 apply the pressure on the sheet 7, the wrinkle is pushed out toward the outside from the vicinity of the center in the width direction by the rollers arranged in the V shaped form. Through the operation in which the rollers arranged in the V shaped form as mentioned above are used to push and expand the sheet 7 from the center of the sheet 7 toward the outside in sequence, the sheet 7 can be stuck along the blade mold 14 while the generation of the wrinkle is avoided.

After the sheet 7 for one layer is stuck on the blade mold 14, the laminating apparatus 1 is again returned to the start position, so that the sheet 7 of a next layer is laminated. This operation is repeated to mold the structural body in which the predetermined number of the sheets 7 is laminated. The laminated body of this prepreg is hardened, thereby manufacturing the structural body made of the reinforced fiber material. According to the present embodiment, it is possible to manufacture the structural body such as members for configuring a spar cap and another wind turbine blade and the like.

## Claims

1. A laminating apparatus of sheets of reinforced fiber material, comprising:
a sheet feeding section which feeds a sheet of a reinforced fiber material;
a first roller which pushes the reinforced fiber material sheet against a mold; and
second and third rollers arranged on a downstream side of said first roller in a feeding direction of the reinforced fiber material sheet, and on both sides of said first roller in a width direction of the reinforced fiber material sheet to push the reinforced fiber material sheet against the mold.

2. The laminating apparatus according to claim 1, further comprising:
a tension roller disposed on an upstream side of the first roller to apply tension force to an entire of the reinforced fiber material sheet in the width direction.

3. The laminating apparatus according to claim 1, wherein each of the first to third rollers carries out a swing motion around a turning axis which is parallel to the feeding direction of the reinforced fiber material sheet.

4. The laminating apparatus according to claim 1, wherein the sheet feeding section comprises:
a rotation axis around which the reinforced fiber material sheet is rolled in a roll form; and
a torque adjusting section which adjusts pulling force of the reinforced fiber material sheet.

5. A laminating method of a sheet of a reinforced fiber material, comprising:
providing a laminating apparatus of the reinforced fiber material sheet according to claim 1;
arranging said mold; and
pushing the reinforced fiber material sheet against said mold by said first to third rollers while the laminating apparatus is moved with respect to said mold in a longitudinal direction of said mold.
